# EUROPEAN PATENT APPLICATION

(11) **EP 0 702 364 A1**
(43) Date of publication of application: **20.03.1996**
(21) Application number: 95114285.0
(22) Date of filing: 12.09.1995
(51) Int. Cl.: G11B 17/22, G11B 17/30

(54) **Disc record reproducing apparatus**

(30) Priority: 16.09.1994 JP 248401/94
(71) Applicant: ASAHI CORPORATION, Chiyoda-ku, Tokyo 102 (JP)
(72) Inventor: Arai, Susumu, Urawa-shi, Saitama (JP)
(74) Representative: Schickedanz, Willi, Dipl.-Ing.

(57) **Abstract**

A disc reproducing unit is shifted between an off-disc position and a reproducing position and moved by a single driving system. A cam gear is rotated through every 180° with rotations of a transmission gear. A support casing for holding the disc reproducing unit is moved up and down, thus shifting the disc reproducing unit between the off-disc position and the reproducing position. A running gear is rotated with rotations of the transmission gear, and a whole movable casing is moved right and left along a rack gear.

## Description

### BACKGROUND OF THE INVENTION

### Field of the Invention

The present invention relates to a disc record reproducing apparatus for reproducing data written on a disc-like storage medium such as a CD (Compact Disc), an LD (Laser Disc), etc..

### Related Background Art

Japanese Patent Post-Exam Publication No.4-67706 discloses a disc record reproducing apparatus constructed to improve an operability by saving labors to exchange a disc, wherein a plurality of discs are disposed in parallel. This disc record reproducing apparatus includes a disc loading unit, provided on an upper surface of a main casing, for placing the plurality of discs on the same plane. The disc record reproducing apparatus also includes a disc reproducing unit, encased in the main casing, for reproducing the data on the disc. The disc reproducing unit moves in the crosswise direction within the main casing, stops in a face-to-face position with the disc loading unit and then reproduces the data. For this purpose, the disk reproducing unit has a turn table for rotating the disc in the disc loading unit and a pick-up for optically reading the data on the disc. Further, the disc reproducing unit includes a moving drive system for making a movement between the disc loading units and a disc drive system for attaching and detaching the turn table to and from the disc by vertically moving the whole disc reproducing unit. The disc reproducing unit incorporates the moving drive system and the disc drive system as independent mechanisms each having a separate motor.

Such a conventional disc record reproducing apparatus reproduces the data in each disc loading unit by the disc reproducing unit making reciprocative movements between the disc loading units, and the disc reproducing unit operates as follows. That is, one disc loading unit, the disc reproducing unit is lowered by an operation of the disc driving syste and moves off the disc. In this state, with an operation of the movement driving system, the whole disc reproducing unit moves to other disc loading unit. In the other disc loading unit, the disc driving system operates to move up the disc reproducing unit with the result that the turn table is attached to the disc, thus effecting the reproduction.

There arise the following problems inherent in the conventional disc record reproducing apparatus. The disc reproducing unit incorporates the movement driving system for moving the disc reproducing unit between the disc loading units and the disc driving system for reproducing the data on the disc in the form of individually separate mechanisms. The conventional disc record reproducing apparatus is therefore large in the number of parts and includes the disc reproducing unit having a complicated structure. Further, the disc reproducing unit increases in size enough not to attain the downsizing of the whole reproducing apparatus.

### SUMMARY OF THE INVENTION

It is a primary object of the present invention, which was devised under such circumstances, to provide a disc record reproducing apparatus capable of attainting the downsizing of the whole apparatus by simplifying of a drive mechanism and, in turn, a structure as well.

To accomplish the above object, according to one aspect of the present invention, the disc record reproducing apparatus comprises a plurality of disc loading units disposed on the same plane and a disc reproducing unit including a driving part for rotating a disc and a reading part for optically reading data on the disc. The disc reproducing unit is used in common by the plurality of disc loading units. The disc record reproducing apparatus further comprises a movement mechanism unit including a transmission unit for moving in reciprocation the disc reproducing unit to a position corresponding to the disc in each of the plurality of disc loading units and shifting the disk reproducing unit between an off-disc position and a reproducing position with respect to the disc. The movement mechanism further includes one motor for driving the transmission unit with forward/reverse rotations thereof.

Based on the above construction, with the forward/reverse rotations of the motor, the disc reproducing unit shifts between the reproducing position and the off-disc position and moves between the disc loading units. Therefore, the necessity for an independent driving system for performing these operations is eliminated, thereby simplifying the driving system and, in turn, the structure as well.

### BRIEF DESCRIPTION OF THE DRAWINGS

Other objects and advantages of the present invention will become apparent during the following discussion in conjunction with the accompanying drawings, in which:
FIG. 1 is a whole perspective view illustrating one embodiment of the present invention;
FIG. 2 is a perspective view showing a placement of a transmission unit;
FIG. 3 is a plan view illustrating a main casing;
FIG. 4 is a plan view illustrating a support casing;
FIG. 5 is a plan view illustrating a transmission gear in the transmission unit;
FIG. 6 is a front view illustrating a cam gear in the transmission unit;
FIG. 7 is a perspective view of a switch member;
FIG. 8 is a plan view showing the operation;
FIG. 9 is a side view showing a reproducing position;
FIG. 10 is a side view showing a off-disc position;
FIG. 11 is a plan view showing the operation of a transmission unit;
FIG. 12 is a plan view showing the operation of the transmission unit;
FIG. 13 is a plan view showing the operation of the transmission unit; and
FIG. 14 is a plan view showing the operation of the transmission unit.

### DESCRIPTION OF THE PREFERRED EMBODIMENT

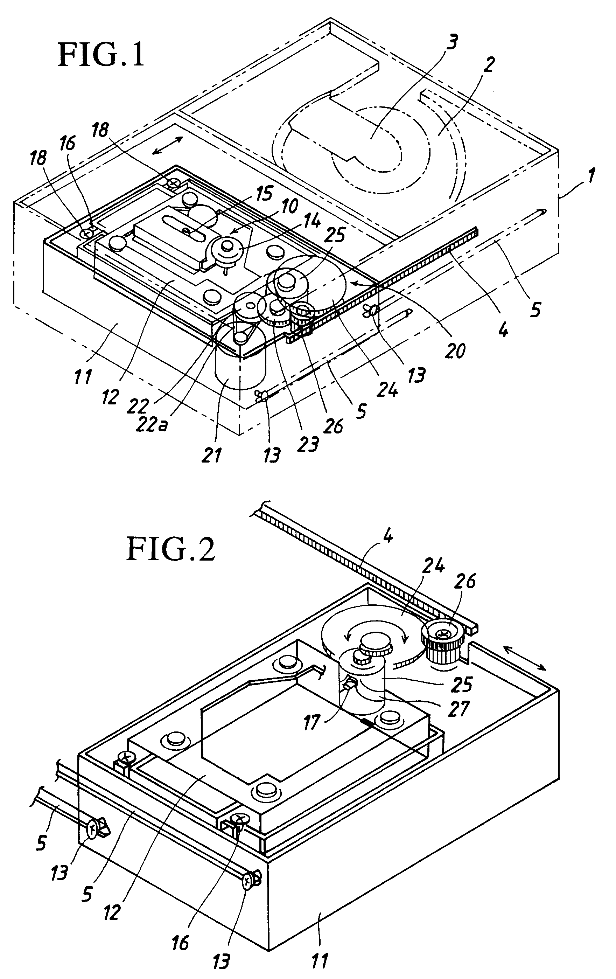

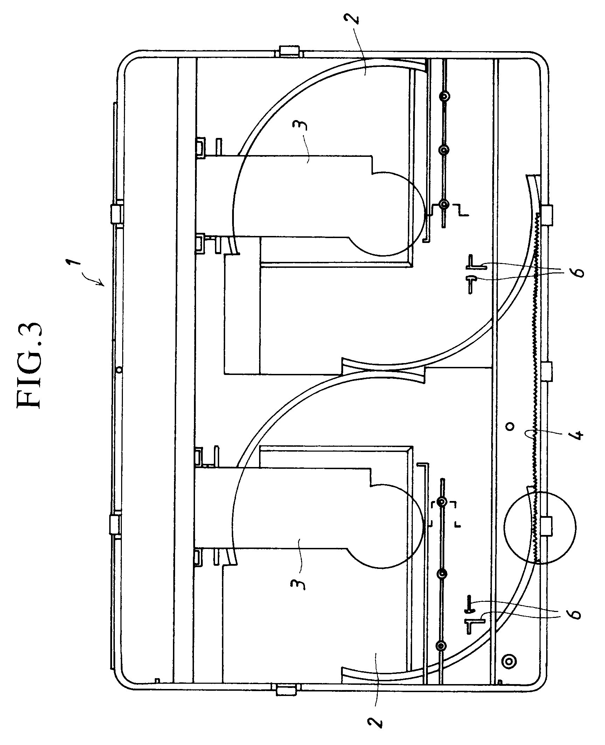

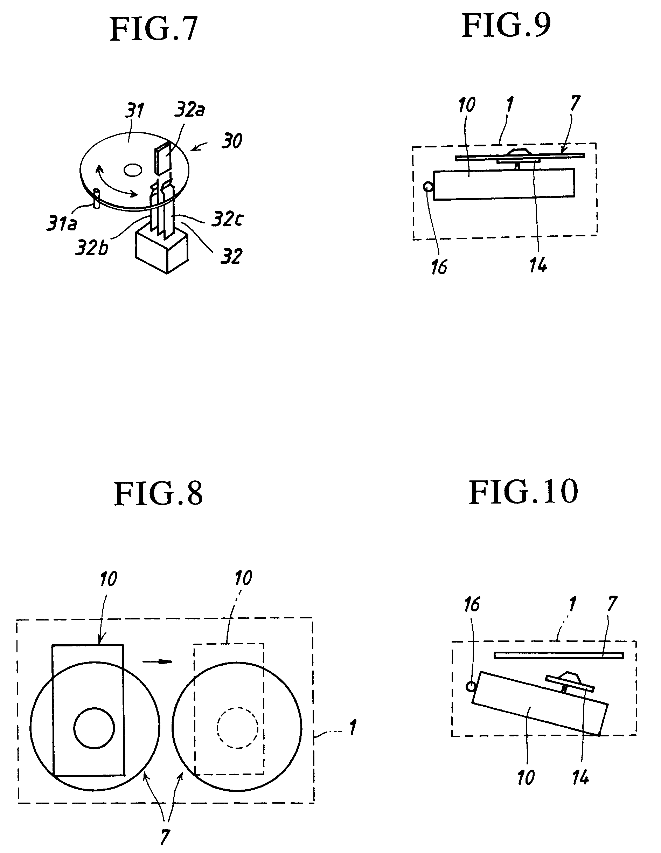

FIGS. 1 and 2 illustrate a whole construction of one embodiment of the present invention. A main casing 1 is molded of plastic, etc. in a box-like shape, and disc loading units 2, 2 are provided in right and left positions of an upper surface of this main casing 1. The disc loading units 2, 2 are loaded with discs 7 (see FIG. 8) one by one and formed with recessed portions each having a diameter corresponding to an outside diameter of the disc. FIG. 3 illustrates the main casing 1, wherein the right and left disc loading units 2, 2 are formed with openings 3 through which a disc reproducing unit 10 that will be mentioned later comes out to drive the disc. A line of rack gear 4 for moving the disc reproducing unit 10 is formed in an inner surface on one side of this main casing 1. Stoppers receiving members 6, 6 are formed corresponding to the disc loading units 2, 2.

The disc reproducing unit 10 reproduces the data on the discs set in the disc loading units 2, 2 and is encased in the main casing 1. This disc reproducing unit 10 reproduces the data on the discs set in the disc loading units 2, 2 and is encased in the main casing 1. This disc reproducing unit 10 is mounted in a movable casing 11 so inserted in the main casing 1 as to be movable right and left. The disc reproducing unit 10 moves as the moving casing 11 moves right and left and is set in a face-to-face relationship with each of the disc loading units 2, 2. Note that a stable movement of the moving casing 11 entails an arrangement in which a plurality of guide slits 5, 5 are formed in the side surface of the main casing 1, and guide pins 13, 13 extending from the moving casing 11 are inserted into these guide slits 5, 5.

The thus constructed disc reproducing unit 10 includes a driving part for rotating the disc and a reading part for optically reading the data on the disc. Referring to FIG. 1, a turn table 14 serves as one element of the drive part of the disk reproducing unit 10 and is linked with a motor (unillustrated) within the disc reproducing unit 10 and is thereby rotated. This turn table 14 is attachable to and detachable from the disc, and the disc is raised from the disc loading unit 2 upon the attachment thereof to the disc and then rotated. An objective lens 15 serving as one element of the reading part is driven in tracking and focusing directions and irradiates the disc with laser beams. The reading part optically reads the data on the disc on the basis of the reflected beam incident on this objective lens, thus reproducing the data. The driving part and the reading part constitute one member of the disc reproducing unit 10. The disk reproducing unit 10 is encased in a support casing 12, and this support casing 12 is fitted to the movable casing 11, thereby attaching the disc reproducing unit 10 to the movable casing 11.

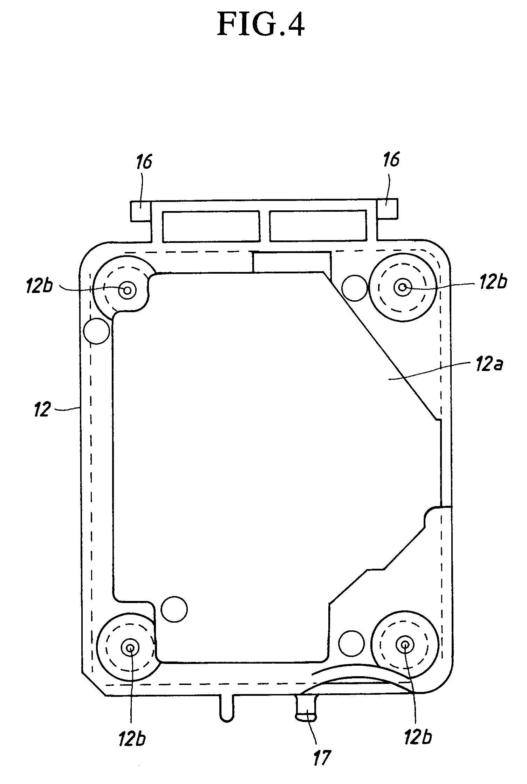

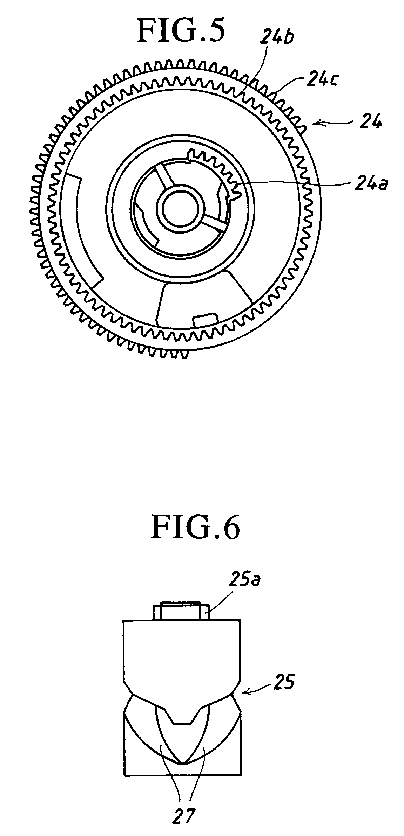

FIG. 4 illustrates the support casing 12, wherein the central portion of an upper surface is formed with an opening 12a for pulling out the turn table 14 and the objective lens 15. The turn table 14 and the objective lens 15 protrude from this opening 12a upwardly of the support casing 12 and, in this state, come out of the openings 3, 3 of the respective disc loading units 2, 2, thus performing the above-described operations. A shaft member 16 is formed integrally on the side surface on one side of the support casing 12. The support casing 12 rotates in up-and-down directions about this shaft member 16, and, with this rotation, the whole disc reproducing unit 10 displaces with respect to the disc. A position of the disc reproducing unit 10 is thereby shifted between a reproducing position and an off-disc position. An engagement rod 17 is formed in a protruded shape integrally on the side surface on the opposite side of this shaft member 16. The engagement rod 17 engages with a cam groove 27 (see FIG. 6) of a movement mechanism unit 20 which will be mentioned later, thus rotating the support casing 12 as described above. Screws for elastically fitting the support casing 12 to the movable casing 11 are inserted into screw holes 12b. Note that the shaft member 16 of the support casing 12 is, with fulcrum screws 18 fitted to the movable casing 11, as illustrated in FIG. 1, rotated in a state where the shaft member 16 is held by the fulcrum screws 18.

The movement mechanism unit 20 for moving the movable casing 11 is encased in the movable casing 11. This movement mechanism unit 20, as shown in FIG. 1, includes a motor 21 mounted in a predetermined position of the movable casing 11 and a transmission unit driven by forward/reverse rotations of this motor 21. The transmission unit is constructed of a cam and a plurality of gears. The transmission unit includes a pulley gear 22 linked via a belt 22a to a pulley on the side of a rotary shaft of the motor 21, a driven gear 23 rotating in mesh with this pulley gear 22, a transmission gear 24 to which a rotating force is transferred by the driven gear 23, a cam gear 25 and a running gear 26 that separately mesh with the transmission gear 24.

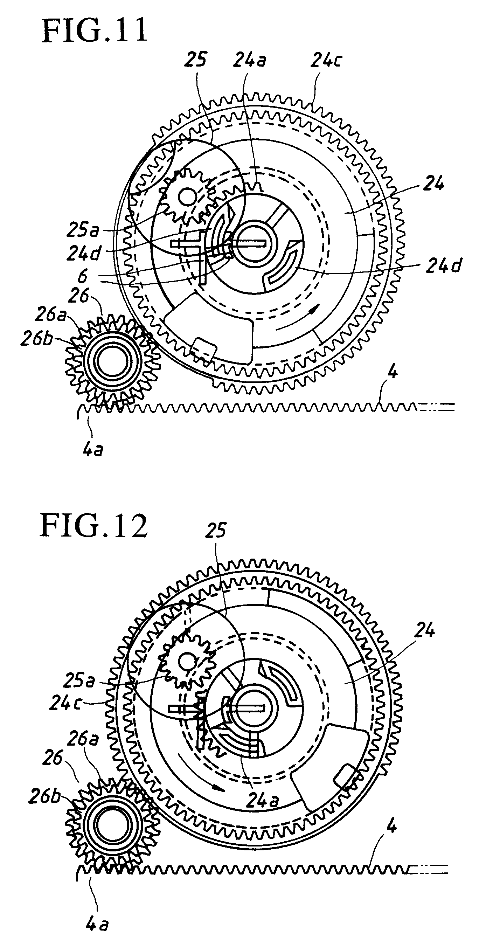

FIG. 5 is a plan view illustrating the transmission gear 24. This gear 24 is formed with three-staged gear teeth 24a, 24b, 24c. The first gear teeth 24a formed on a smallest-diameter portion works to rotate the cam gear 25 which will be mentioned later. The first gear teeth 24a are formed not along the entire periphery thereof but on a segment of the outer periphery thereof. Hence, the cam gear 25 rotates when engaging with the first gear teeth 24a but stops rotating when disengaging therefrom. The third gear teeth 24c on a largest-diameter outer peripheral portion are formed on an area of approximately two-thirds of the whole outer periphery. The third gear teeth 24c mesh with the running gear 26 to rotate the same gear 26, thus moving the movable casing 11. The second gear teeth 24b formed on an intermediate-diameter portion mesh with the driven gear 23 and thereby receives the rotating force of the motor 21. Note that two pieces of stopper members 24d each taking a shape of circular arc are, as illustrated in FIGS. 11 through 14, on the lower surface of the transmission gear 24. This stopper member 24d is fitted into a stopper receiving member 6 of the main casing 1, thereby positioning the movable casing 11 as well as restraining a careless movement of the movable casing 11.

FIG. 6 shows the cam gear 25 having gear teeth 25a meshing with the first gear teeth 24a of the transmission gear 24. A cam groove 27 is formed in the side surface of this cam gear 25. The cam groove 27 is so formed as to be inclined to an axial direction of the cam gear 25. An engagement rod 17 of the support casing 12 is inserted in this cam groove 27. With this arrangement, the engagement rod 17 operates so as to be pushed up and down with the rotations of the cam gear 25, with the result that the support casing 12 is rotated in the up-and-down directions.

The running gear 26 has, as illustrated in FIGS. 11 to 14, the two-staged gear teeth 24a, 24b, wherein the rotating force is transmitted when the large-diameter gear teeth 24a mesh with the third gear teeth 24c of the transmission gear 24. On the other hand, the small-diameter gear teeth 24b mesh with the rack gear 4 formed on the main casing 1. Accordingly, the running gear 26 is rotated, whereby the movable casing 11 is movable in the right-and-left directions within the main casing 1.

The transmission unit including the plurality of gears described above is driven with rotations of the motor 21, and the movable casing 11 is transferred from one disc loading unit 2 to the other disc loading unit 2 with the forward rotations of the motor 21. On the other hand, with the reverse rotations of the motor 21, the movable casing 11 is moved in the direction opposite thereto. FIG. 7 illustrates one example of a switch member 30 for switching over the forward/reverse rotations of the thus operated motor 21. A rotary plate 31 attached to the transmission gear 24 but integral with the transmission gear 24 includes a pin 31a. A leaf switch 32 outputs a drive signal to the motor 21 and has three contact pieces 32a, 32b, 32c. The pin 31a of the rotary plate 31 is brought into contact with the contact piece 32a. This switch member 30 works such that, in a halt-of-rotation status of the rotary plate 31 rotating integrally with the transmission gear 24, i.e., in an end-of-movement status of the movable casing 11 in one direction, the pin 31a pushes the contact piece 32a with the result that the contact pieces 32a, 32b contact each other, thereby attaining an ON state. On the other hand, in a status where the rotary plate 31 rotates in the opposite direction and then halts, viz., in an end-of-movement status of the movable casing 11 in the opposite direction, the pin 31a pushes the contact piece 32a so as to contact the contact piece 32c, thereby attaining an ON state in the opposite direction. The rotating direction of the motor 21 is changed by performing the switchover to these contact pieces 32b, 32c.

Note that the switch member is not confined to the above-described mechanical structure but may take other structures. For instance, an optical sensor and a magnetic sensor are disposed at a movement terminal in each direction of the movable casing 11 in order to detect the movable casing 11, and the forward/reverse rotations of the motor 21 may be changed based on a detection signal thereof.

Next, the operation of this embodiment will be explained with reference to FIGS. 8 through 14. FIG. 8 illustrates a basic mode of the operation, wherein a disc 7 is loaded into each disc loading unit of the main casing 1, and the disc reproducing unit 10 moves together with the movable casing 11 between the disc loading units. FIG. 9 shows a reproducing status in the disc loading unit, wherein,the turn table 14 of the disc reproducing unit 10 is attached to the disc 7. A reproducing position is where the disc reproducing unit 10 exists at this time. FIG. 10 illustrates states just before the disc reproducing unit 10 is going to move and immediately after the same unit 10 has moved, wherein the disc reproducing unit 10 rotates about the shaft member 16 in such a direction as to move off the disc and thus retreats. An off-disc position is where the disc reproducing unit 10 exists at this time.

FIG. 11 illustrates a state of the transmission unit when the disc reproducing unit 10 is in the reproducing position (FIG. 9) in one disc loading unit 2. In this state, the stopper member 24d of the transmission gear 24 is fitted and thus positioned in the stopper receiving member 6 of the main casing 1, thereby restraining a careless movement thereof. One-way rotations of the motor 21 are transmitted in this state, and the transmission gear rotates counterclockwise. With the rotations thereof, the gear teeth 25a of the cam gear 25 mesh with the first gear teeth 24a of the transmission gear 24, whereby the cam gear 25 rotates. The cam gear 25 rotates only when engaging with the first gear teeth 24a. Then, the cam gear 25 rotates through 180° and stops. With this rotation of the cam gear 25, the engagement rod 17 of the support casing 12 is pushed down along the cam groove 27, and the support casing 12 is thereby rotated downward about the shaft member 16. Accordingly, the disc reproducing unit 10 displaces in such a direction as to move off the disc 7 and thus reach the off-disc position shown in FIG. 10. During the above operation, the running gear 26 does not engage with the transmission gear 24 and does not therefore rotate at all.

FIG. 12 illustrates a status where the transmission unit is in the off-disc position. The third gear teeth 24c of the transmission gear 24 reaches the meshing position with one gear teeth 26a of the running gear 26. Accordingly, the motor 21 continues to rotate, and the running gear 26 is thereby rotated. These rotations thereof causes a movement along the rack gear 4 from a starting edge 4a thereof, and the movable casing 11 moves toward the other disc loading unit 2 (see FIG. 8).

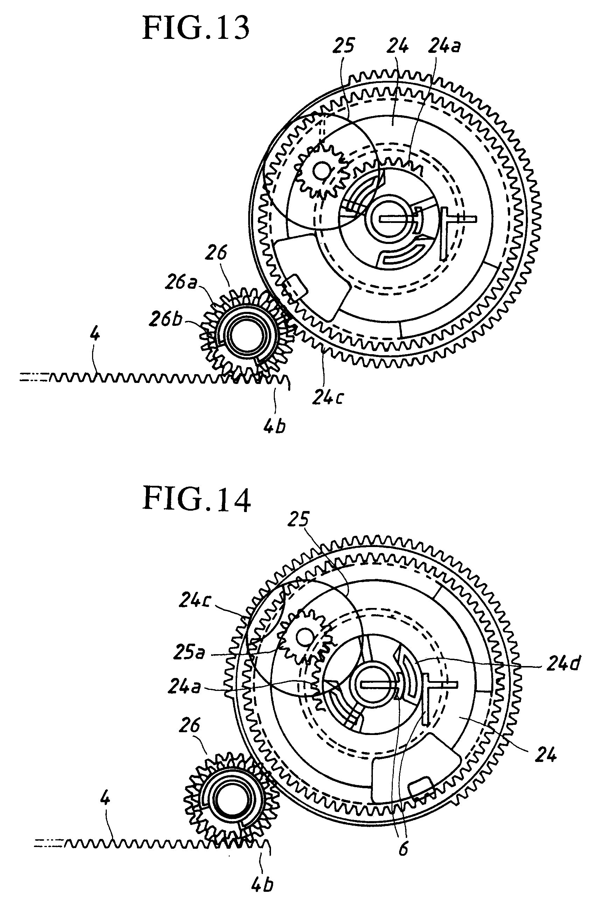

FIG. 13 shows a status of the transmission unit when reaching the other disc loading unit 2. The running gear 26 reaches a terminal of the rack gear 4. Simultaneously with this, the third gear teeth 24c of the transmission gear 24 disengages from the one gear teeth 26a of the running gear 26, and the movable casing 11 stops moving.

FIG. 14 shows a status of the transmission unit as continued from FIG. 13. The motor 21 further rotates, and the transmission gear 24 continues to rotate counterclockwise. Hence, the first gear teeth 24a of the transmission gear 24 engage with the gear teeth 25a of the cam gear 25, and the cam gear 25 rotates through 180°. The engagement rod 17 inserted in the cam groove 27 of the cam gear 25 is thereby raised along the cam groove 27, and the support casing 12 rotates upward about the shaft member 16. Accordingly, the disc reproducing unit 10 shifts to the reproducing position shown in FIG. 9, whereby the reproducing from the disc 7 can be done. At this time, the stopper member 24d of the transmission rod 24 is fitted into the stopper receiving member 6 on the side of the other disc loading unit 2, thus positioning it. Simultaneously with this, the contact piece of the leaf switch 32 is switched over, and the motor 21 is rotatable in the opposite direction. Hence, thereafter, when a command-of-movement signal of the disc reproducing unit 10 is inputted, the operation opposite thereto is to be performed. Then, the disc reproducing unit 10 moves off the disc, and the movement to one disc loading unit 2 is conducted.

In accordance with this embodiment discussed above, with the forward/reverse rotations of one motor 21, the disc reproducing unit 10 is capable of shifting between the reproducing position and the off-disc position and moving between the disc loading units. Hence, the driving system can be simplified, and the structure is also simplified with a reduced number of the parts, with the result that the downsizing can be attained.

According to the present invention, there is provided the transmission unit by which the disc reproducing unit shifts between the reproducing position and the off-disc position and moves with the forward/reverse rotations of the single motor. The driving system can be therefore simplified, and the structure is also simplified, whereby the downsizing is attainable.

It is apparent that, in this invention, a wide range of different working modes can be formed based on the invention without deviating from the spirit and scope of the invention. This invention is not restricted by its specific working modes except being limited by the appended claims.

## Claims

1. A disc record reproducing apparatus comprising:
a plurality of disc loading units disposed on the same plane;
a disc reproducing unit including a driving part for rotating a disc and a reading part for optically reading data on the disc, said disc reproducing unit being used in common by said plurality of disc loading units; and
a movement mechanism unit including transmission means for moving in reciprocation said disc reproducing unit to a position corresponding to the disc in each of said plurality of disc loading units and shifting said disk reproducing unit between an off-disc position and a reproducing position with respect to the disc, said movement mechanism further including one motor for driving said transmission means with forward/reverse rotations thereof.
